# EUROPÄISCHE PATENTSCHRIFT

(11) **EP 2 154 980 B1**
(45) Veröffentlichungstag und Bekanntmachung des Hinweises auf die Patenterteilung: **26.10.2011**
(21) Anmeldenummer: 08758761.4
(22) Anmeldetag: 26.05.2008
(51) Int. Cl.: A23C 3/03, A23L 3/16, A23L 3/22, A23K 1/18, B67D 3/00, F28D 1/02, F28D 1/04

(54) **PASTEURISIERUNGSANLAGE ZUM PASTEURISEREN VON TIERFUTTER**
SYSTEM FOR PASTEURIZING ANIMAL FOOD
INSTALLATION DE PASTEURISATION D'ALIMENTS POUR ANIMAUX

(30) Priorität: 24.05.2007 DE 102007024548
(43) Veröffentlichungstag der Anmeldung: 24.02.2010
(73) Patentinhaber: Förster, Martin, 78234 Engen (DE)
(72) Erfinder: Förster, Martin, 78234 Engen (DE)
(74) Vertreter: Weiss, Peter
(86) Internationale Anmeldenummer: PCT/EP2008/004173
(87) Internationale Veröffentlichungsnummer: WO 2008/141841

(56) Entgegenhaltungen:
- EP-B- 1 610 618
- EP-B- 1 613 167
- DE-A1- 10 328 518
- DE-A1-102005 030 924

## Beschreibung

Die Erfindung betrifft eine Pasteurisierungsanlage zum Pasteurisieren von Tierfutter mit einer Pasteurisierungseinheit und einer Kühleinheit.

### Stand der Technik

Um Tierfutter, insbesondere Milch, von krankheitserregenden Keimen zu befreien ist es bekannt, diese zu pasteurisieren oder mit keimtötenden Mitteln zu behandeln. Insbesondere ist das Pasteurisieren von Milch für die Tierfütterung bekannt, indem die Milch durch Pasteurisieren von Keimen, Bakterien, Vieren etc. befreit wird.

In Pasteurisierungsanlagen für flüssiges Tierfutter erfolgt das Keimfreimachen, wie z. B. von Milch, in der Regel durch ein Erhitzen und anschliessendes Abfühlen. Insbesondere für Kälber ist es in den Anfangswochen wichtig, dass diese mit der sogenannten Biestmilch gefüttert werden, da diese die meisten Substanzen zum Aufbau von Abwehrkräften enthält, welche jedoch auch keimbelastet sein kann. Um nun die Jungtiere vor möglichen Krankheitserregern, Bakterien, Pilzen etc. zu schützen, wird insbesondere auch die Biestmilch pasteurisiert, bevor sie dann als Tiernahrung gegeben wird.

Problematisch ist bei den bekannten Pasteurisierungsanlagen nicht die eigentliche Pasteurisierungseinheit als solche, sondern die Erhitzungs- und Abkühlungszeit des beim Pasteurisieren doch immerhin bis zu 90° C erwärmten flüssigen Tierfutters. Je langsamer dieser Vorgang abläuft, desto grösser ist bei Milch die Gefahr, dass bei Temperaturen über 42° C wertvolle Milchbestandteile zerstört werden. Ferner ist es überhaupt sehr schwierig, Biestmilch zu pasteurisieren, da diese sich, anders als normale Milch, bei etwa 60°C puddingartig verdickt und die Rohrleitung verstopft. Auch bilden sich filmartige Belege auf den wärmeübertragenden Flächen, die ebenfalls zu Verstopfungen führen.

In diesem Zusammenhang ist aus der EP 0 604 308 B2 eine Wärmetauscheranlage zur kontrollierten Kühlung von frisch gemolkener Tiermilch bekannt, bei der ein Wärmetauscher mit zwei konzentrisch angeordneten Kreisen bzw. Leitungen vorgesehen ist, zwischen denen der Wärmetausch stattfindet, und zwar in der einen Leitung fliesst Wasser zur Kehlung und in der anderen Leitung die zu kühlende Milch.

Richtige Pasteurisierungsanlagen sind allerdings aus der EP 1 494 960 B1, der EP 1 610 618 B1 und der EP 1 613 167 bekannt.

Die DE 103 28 518 A1 offenbart eine Pasteurisierungsanlage zum Erhitzen und anschliessendem Abkühlen von Tierfutter. Die horizontal gelagerte Vorrichtung besteht aus einer Pasteurisierungseinheit (Sekundärwärmetauscher) und einer Kühleinheit aus einem bzw. mehreren horizontal hintereinander geschalteten Primärwärmetauschern mit einer sich im Innern befindlichen Abkühlspirale.

### Aufgabe

Der vorliegenden Erfindung liegt daher die Aufgabe zugrunde, eine praktikable Pasteurisierungsanlage zum Pasteurisieren von flüssigen Nahrungsmitteln von

Tieren, wie Milch und insbesondere von Biestmilch, für eine keimfreie Tierfütterung zu schaffen, bei welcher insbesondere eine schnelle schonende Erhitzung und Abkühlung der flüssigen Nahrungsmittel bis zur Gebrauchstemperatur als Tierfutter gewährleistet ist. Umgekehrt soll es gleichzeitig mit dieser Anlage möglich sein, gekühlte flüssige Tiernahrungsmittel schonend vorzuwärmen, bevor diese pasteurisiert werden. Ferner sind geeignete Verfahren zum Betreiben der Pasteurisierungsanlage anzugeben.

### Lösung der Aufgabe

Gelöst wird die Aufgabe gemäß Anspruch 1 Zur Lösung dieser Aufgabe führt, dass die Kühleinheit als Wärmeaustauscher ausgebildet ist, dessen Höhenausdehnung ein Mehrfaches seiner grössten Querschnittsausdehnung beträgt, in dessen Inneren eine Rohrleitung als Abkühlschlange vorgesehen ist, die dessen Höhenausdehnung nahezu vollkommen durchläuft.

Nach Massgabe der Erfindung ist es zweckmässig, wenn der Wärmeaustauscher zylinderförmig ausgebildet ist und sich dessen Höhenausdehnung "H" zum Durchmesser des kreisförmigen Querschnitts "D" wie 2:1 bis 10:1, insbesondere 4:1 verhält, was eine möglichst lange und somit schonend wirkende Kühlstrecke begünstigt.

Um dies zu erreichen, ist es erfindungsgemäss vorgesehen, dass der Wärmeaustauscher in seinem Inneren eine Rohrleitung in der Form einer Abkühlschlange aufweist, die dessen Höhenausdehnung nahezu vollkommen durchläuft. Hierbei ist es zweckmässig, um eine möglichst grosse Wärmeaustauschfläche zu erhalten, dass die Abkühlschlange schraubenfederförmig ausgebildet ist, wobei die Abkühlschlange und mit ihrem oberen Ende mit einem Zulaufstutzen und ihrem unteren Ende mit einem Auslaufstutzen, welche jeweils an dem Wärmeaustauscher angeordnet sind, verbunden ist.

Dabei ist es vorteilhaft, wenn der Zulauf- und der Ablaufstutzen jeweils ein Regelorgan, wie ein Ventil und einen Sensor zur Temperaturmessung besitzt, wobei dabei der Zulaufstutzen der Abkühlschlange mit der Pasteurisierungseinheit und der Auslaufstutzen der Abkühlschlange mit mindestens einer Tränkeeinheit für Tiere weiterleitbar ist, wobei die pasteurisierte Milch in einem Vorratsbehälter bevorzugt gekühlt, und ggf. konserviert zwischengelagert wird.

Als Wärmetauschmedium eignet sich besonders Wasser, welches vorteilhaft über einen im Bodenbereich des Wärmeaustauschers angeordneten Zulaufhahn mit Temperatursensor als kaltes Wasser in diesen eintritt und über einen im Deckenbereich des Wärmeaustauschers vorgesehenen Abflusshahn mit Temperatursensor aus diesem wieder austritt. Um dabei einen besonders guten Wirkungsgrad des Wärmeaustauschers zu erreichen, ist es von Vorteil, wenn der im Bodenbereich des Wärmeaustauschers vorgesehene Zulaufhahn einen derartigen Einlaufstutzen aufweist, dass das kalte Wasser tangential in den Wärmeaustauscher einströmt. Damit erhält der Wasserinhalt des Wärmeaustauschers einen gewissen Drall, um den Wärmeaustausch zwischen Wasser und Milch zu beschleunigen.

Zur Erzeugung von keimfreien flüssigen Nahrungsmitteln von Tieren, wie in der Form von Milch für die Tierfütterung, zeichnet sich die vorliegende Erfindung besonders durch ein Verfahren zum Betreiben der erfindungsgemässen Pasteurisierungsanlage dadurch aus, dass die in der Pasteurisierungseinheit behandelten flüssigen Nahrungsmittel für Tiere, wie Milch, mit einer Temperatur zwischen 60°C bis 90°C, insbesondere 72°C in die Abkühlschlange des Wärmeaustauschers eingeleitet und mit einer Temperatur zwischen 4°C bis 45°C, vorzugsweise 38°C aus diesem wieder ausgeleitet wird.

Ferner ist es bei dem erfindungsgemässen Verfahren von Vorteil, wenn die in die Abkühlschlange des Wärmeaustauschers eingeleiteten, in der Pasteurisierungseinheit zur Keimvemichtung behandelten Nahrungsmittel für Tiere mit dem die Abkühlschlange umgebenden Wasser einen derartigen Wärmeaustausch erfahren, dass über den Zulaufhahn im Bodenbereich des Wärmeaustauschers mit einer Temperatur von etwa 4°C bis 20°C, vorzugsweise 15°C oder Eiswasser von Temperaturen unter 0°C in diesen eintretendes Wasser den Wärmeaustauscher über den im Deckenbereich vorgesehenen Abflusshahn mit einer Temperatur von 50°C bis 80°C, vorzugsweise über 65°C wieder verlässt, was dann vorteilhaft als Nebenprodukt in Form von warmem Brauchwasser anderweitig benutzt bzw. verwendet werden kann.

Bei einer Pasteurisierungsanlage kann die Pasteurisierungseinheit getrennt von dem Wärmetauscher angeordnet sein, bei einem anderen Ausführungsbeispiel sitzt die Pasteurisierungseinheit auf dem Wärmetauscher auf. Hierdurch entsteht eine sehr kompakte und raumsparende Einheit.

In der Pasteurisierungseinheit kann die Pasteurisierungstemperatur durch eine Tauchsiedereinheit erzeugt werden, die das umgebende Wasser erwärmt. Weiterhin besteht die Möglichkeit der Zufuhr von heissem Wasser, welches jedoch noch vor dem Wärmetauscher wieder abgeführt wird. Die Pasteurisierung kann aber auch mittels der Milch zugeführtem Dampf erfolgen. Die Zuführung geschieht bevorzugt in einer Mischkammer oder in einem Mischrohr, in wetcher/m der Dampf mit der Milch in Rotation versetzt und/oder verwirbelt wird.

In einem weiteren Ausführungsbeispiel der Erfindung kann der Wärmeaustauscher zusätzlich zur Abkühlschlange für in der Pasteurisierungseinheit behandelte flüssige Nahrungsmittel für Tiere ggf. noch eine weitere zylindrische schraubenfederförmige Vorwärmrohrschlange zum Vorwärmen von insbesondere aus einem Kühltank stammende flüssige Nahrungsmittel, insbesondere Milch für Tiere aufweisen. Diese Vorwärmrohrschlange kann mit der Abkühlschlange ineinander eingreifen. Somit addiert sich die Gesamthöhe und damit erhöht sich der Wirkungsgrad deutlich.

Aus Platzgründen bietet sich hierbei an, den Durchmesser der Vorwärmrohrschlange gegenüber der Abkühlschlange kleiner auszubilden und innerhalb dieser anzuordnen. Zweckmässigerweise ist die Vorwärmrohrschlange derart zu installieren, dass sie im Bodenbereich des Wärmeaustauschers mit einem dort angeordneten Zulaufstutzen und in dessen Deckenbereich mit einem dort vorgesehenen Ablaufstutzen in Verbindung steht, wobei sowohl der Zulauf- als auch der Ablaufstutzen für eine bessere Regelung jeweils mit einem Sperrorgan und einem Temperatursensor ausgerüstet sein kann. Dabei sind der Zulaufstutzen mit dem Kühltank für flüssige Nahrungsmittel von Tieren und der Ablaufstutzen mit der Pasteurisierungseinheit verbunden.

Auch bei dieser Variante zeichnet sich die vorliegende Erfindung durch ein Verfahren zum Erzeugen von flüssigen Nahrungsmitteln von Tieren, wie Milch, für die Tierfütterung aus einem Kühltank dadurch besonders aus, dass bei der erfindungsgemässen Pasteurisierungsanlage das flüssige Nahrungsmittel von Tieren aus dem Kühltank mit einer Temperatur von etwa 6°C, insbesondere 4°C in die Vorwärmrohrschlange eingeführt, von dieser dann vorgewärmt auf bis zu etwa 60°C in die Pasteurisierungseinheit geleitet und sodann nach deren Keimfreimachung in dieser über die Abkühlschlange mindestens einer Tränkeeinrichtung für die Tiere gebrauchsfertig zugeführt wird.

Eine hervorzuhebende Verbesserung der Temperaturübertragung in dem Kühlmedium in beiden Richtungen erfolgt erfindungsgemäss dadurch, dass das zu behandelnde Medium, bspw. Milch, gepulst durch eine Rohrwendel, aus der die Abkühlschlange bzw. die Vorwärmschlange besteht, geführt wird. Hierdurch wird die Rohrwendel, die in dem Kühlmedium schwebt, in Schwingung versetzt, wodurch sich die Temperaturübertragung beschleunigt und verbessert, ohne dass dabei die Temperaturschichten im Medium vermischt und damit zerstört werden. Für diesen Erfindungsgedanken wird im übrigen auch Schutz für Anlagen begehrt, in denen keine Pasteurisierung, sondern z.B. nur eine normale Kühlung oder Vorwärmung erfolgt.

Die Temperatursteuerung in der Pasteurisierungseinheit geschieht bevorzugt über die Regelung eines Heizkörpers einer Tauchsiedereinrichtung, der Regelung einer Heisswasserzufuhr und/oder durch Regelung einer Dampfzufuhr mit Hilfe von Daten von Temperatursensoren, die sich im Eintauchbereich des Heizkörpers, im Heisswasserzufuhrbereich und/oder im Bereich der Dampfheizung befinden. Zur Optimierung kann über einen Prozessrechner die Leistung von Pumpen für die Milch gesteuert werden. Die Durchlaufgeschwindigkeit und damit die Verweildauer im Wärmetauscher bzw. in der Pasteurisierungseinheit von zu pasteurisierender bzw. abzukühlender Milch und/oder von zu erwärmender Milch wird durch Änderung der Leistung von die Milch fördernden Pumpen geregelt.

Schliesslich ist es für eine einfache Handhabung der erfindungsgemässen Pasteurisierungsanlage zweckmässig, dass sämtliche Temperatursensoren einerseits und sämtliche Dosierorgane andererseits an eine Recheneinheit angeschlossen sind, mit welcher manuell oder automatisch die Regelung der gesamten Verfahrensabläufe, auch der Reinigung, bewerkstelligt werden kann, wobei die erfindungsgemässe Pasteurisierungsanlage nicht nur stationär, sondern auch mobil installiert werden kann.

### Figurenbeschreibung

Weitere Vorteile und Merkmale der vorliegenden Erfindung ergeben sich aus der nachfolgenden Beschreibung bevorzugter Ausführungsbeispiele sowie anhand der Zeichnung; diese zeigt in
Fig. 1 als Schema eine Pasteurisierungsanlage, die einen Wärmeaustauscher mit einer Abkühlschlange aufweist, wobei gleichzeitig gestrichelt eine zweite Lösung gezeigt ist, bei der zusätzlich noch eine Vorvvärmrohrschlange in dem Wärmeaustauscher vorgesehen ist;

Fig. 2 einen Schnitt durch den Wärmeaustauscher entlang Linie II -II in Fig. 1;
Fig. 3 einen Schnitt durch den Wärmeaustauscher entlang Linie III - III in Fig. 2;
Fig. 4 eine Seitenansicht einer weiteren Ausführungsform einer Pasteurisierungsanlage;
Fig. 5 eine Seitenansicht von Teilen der Pasteurisierungsanlage nach Fig. 4.

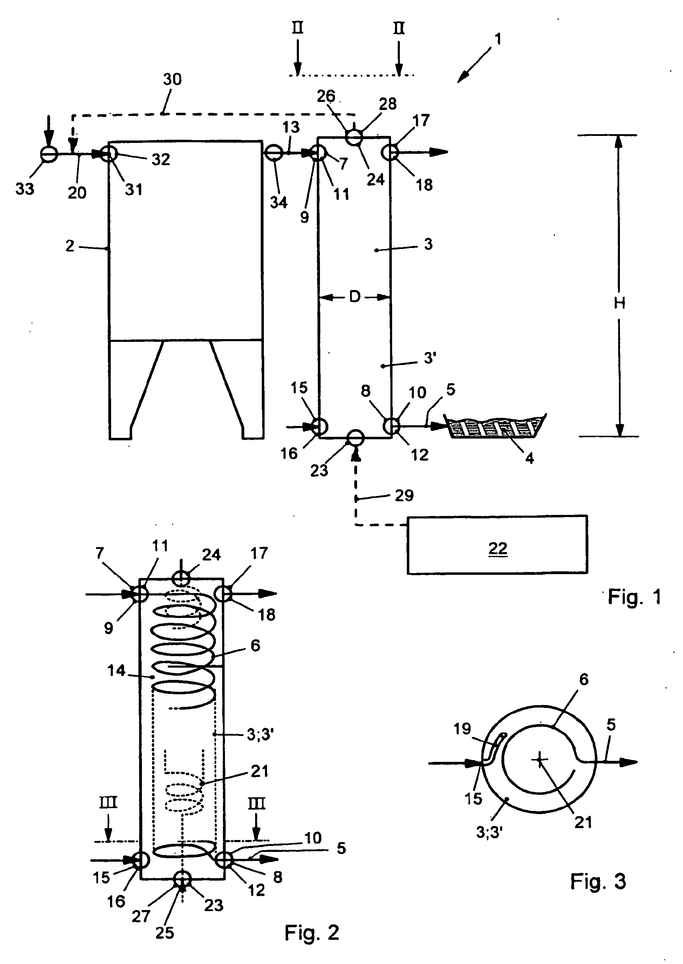

In Fig. 1 ist schematisch eine Pasteurisierungsanlage dargestellt - bezeichnet mit 1 - , die im Wesentlichen eine Pasteurisierungseinheit 2 und einen Wärmeaustauscher 3 bzw. 3' umfasst. An die Pasteurisierungsanlage 1. ist ferner eine Tränkevorrichtung 4 für Tiere über eine Leitung 5 angeschlossen.

Der Wärmeaustauscher 3 bzw. 3' ist zylinderförmig ausgebildet und besitzt eine Höhenausdehnung "H", und sein kreisförmiger Querschnitt hat einen Durchmesser "D", wobei das Verhältnis von H : D bei diesem Ausführungsbeispiel 4 : 1 beträgt, was eine relativ lange Kühlstrecke ergibt und damit eine gleichmässige und schonende Abkühlung ohne Qualitätsverluste gewährleistet.

Wie in Fig. 2 ersichtlich, besitzt der Wärmeaustauscher 3 als erstes Ausführungsbeispiel in seinem Inneren eine Rohrleitung in der Form einer Abkühlschlange 6, die schraubenfederförmig ausgebildet ist und die Höhenausdehnung "H" des Wärmeaustauschers 3 nahezu vollkommen durchläuft. Die Abkühlschlange 6 selbst ist mit ihrem oberen Ende mit einem Zulaufstutzen 7 und ihrem unteren Ende mit einem Ablaufstutzen 8 verbunden, welche jeweils an dem Wärmeaustauscher 3 angeordnet sind. Sowohl der Zulauf als auch der Ablaufstutzen 7 bzw. 8 besitzen jeweils ein Ventil 9 bzw. 10 als Regelorgan und einen Sensor 11 bzw. 12 für Temperaturmessungen.

Der Zulaufstutzen 7 der Abkühlschlange 6 ist mit einer aus der Pasteurisierungseinheit 2 kommenden Zuleitung 13 und der Ablaufstutzen 8 der Abkühlschlange 6 über die Leitung 5 mit der Tränkevorrichtung 4 verbunden.

Die Abkühlschlange 6 ist von Wasser 14 umgeben, welches über einen im Bodenbereich des Wärmeaustauschers 3 angeordneten Zulaufhahn 15 mit einem Temperatursensor 16 als kaltes Wasser in diesen eintritt und über einen im Deckenbereich des Wärmeaustauschers 3 vorgesehenen Ablaufhahn 17 mit einem Temperatursensor 18 aus diesem als erwärmtes Wasser wieder austritt.

Eine Besonderheit des Zulaufhahns 15 ist in Fig. 3 dargestellt, und zwar besitzt dieser im Inneren des Wärmeaustauschers 3 bzw. 3' einen tangential verlaufenden Einlaufstutzen 19, sodass das kalte Wasser 14 tangential in den Wärmeaustauscher 3 einströmt und somit eine Verbesserung der Wärmeübertragung zwischen Wasser und Milch erfolgen kann.

Das Verfahren zum Erzeugen von pasteurisierter Milch zur Tierfütterung läuft am Beispiel von Milch mit Hilfe der Pasteurisierungsanlage 1 wie folgt ab:
Über eine Zuleitung 2.0 gelangt Milch in die Pasteurisierungseinheit 2 und wird dort in bekannter Weise durch Erhitzung pasteurisiert und gelangt dann mit einer Temperatur von 72°C über die Zuleitung 13 zu dem Zulaufstutzen 7 der Kühlschlange 6, durchläuft diese und tritt beim Auslaufstutzen 8 der Kühlschlange 6 mit einer reduzierten Temperatur von unter 45°C und bevorzugt von etwa 38° bis 42°C aus dem Wärmeaustauscher 3 wieder aus und gelangt dann über die Leitung 5 in die Tränkevorrichtung 4, wo die Jungtiere dieses flüssige Tierfutter trinken können. Die Milch kann auch in einem Vorratsbehälter konserviert und zwischengelagert werden.
Um diese Abkühlung der Milch zu erhalten, wird gleichzeitig dem Wärmeaustauscher 3 über den Zulaufhahn 15 relativ kaltes Wasser von ca. 15°C zugeführt, und zwar über den tangentialen Einlaufstutzen 19, welches dann nach dem Wärmeaustausch mit der in der Abkühlschlange 6 strömenden Milch den Wärmeaustauscher 3 mit einer mittleren Temperatur von etwa 65°C über den Ablaufhahn 17 wieder verlässt. Dieses erwärmte Wasser 14 kann dann bevorzugt als Brauchwasser weiterverwendet werden, bspw. zum Spülen und Reinigen.

Das in Fig. 1 und 2 mit aufgenommene zweite Ausführungsbeispiel sieht vor, dass ein Wärmeaustauscher 3' noch zusätzlich zur Abkühlschlange 6 eine Vorvvärmrohrschlange 21 aufweist, die, wie die Abkühlschlange 6, ebenfalls zylindrisch und schraubenfederförmig ausgebildet ist. Diese Vorwärmrohrschtahge 21 kann zum Vorwärmen von aus einem Kühltank 22 stammendem flüssigen Nahrungsmittel, insbesondere Milch, für Tiere eingesetzt werden. Auf diese Weise wird auch eine Wärmerückgewinnung aus der Milchkühlung gewährleistet. Hierfür besitzt die Vorwärmrohrschlange 21 einen Durchmesser, der gegenüber der Abkühlschlange 6 geringer ist, sodass sie innerhalb der Abkühlschlange 6 angeordnet werden kann. In einem bevorzugten Ausführungsbeispiel weist aber die "Helix der Vorwärmrohrschlange 21 den gleichen Durchmesser auf, wie die Helix der Abkühlschlange 6 und beide Schlangen sind ineinander geführt.

Die Vorwärmrohrschlange 21 hat wiederum im Bodenbereich des Wärmeaustauschers 3' einen Anschluss über einen Zulaufstutzen 23 und in dessen Deckenbereich einen Ablaufstutzen 24, wobei sowohl der Zulauf- als auch der Ablaufstutzen 23 bzw. 24 jeweils mit einem Sperrorgan in der Form eines Ventils 25 bzw. 26 und einem Temperatursensor 27 bzw. 28 ausgerüstet ist. Dabei ist der Zulaufstutzen 23 mit dem Kühltank 22 über eine Rohrleitung 29 und der Ablaufstutzen 24 über eine Rohrleitung 30 mit der Zuleitung 20 der Pasteurisierungseinheit 2 verbunden.

In dem Fall, dass nun statt frischer Milch solche aus dem Kühltank 22 für die Aufbereitung als gebrauchsfertiges Tierfutter herangezogen wird, verläuft das Verfahren hierfür wie folgt ab:
Zuerst wird die gekühlte Milch aus dem Kühltank 22 mit einer Temperatur von 4°C der Vorwärmrohrschlange 21 über die Rohrleitung 29 zugeführt und während des Durchströmens durch die Vorwärmrohrschlange 21 auf 50°C vorgewärmt. Sodann erfolgt die Weiterleitung der vorgewärmten Milch über die Rohrleitung 30 zu der Zuleitung 20, von der sie dann über ein Regelventil 31 mit Temperatursensor 32 der Pasteurisierungseinheit 2 zur Keimfreimachung zugeführt wird, um dann letztlich wieder wie im ersten Ausführungsbeispiel die Abkühlschlange 6 zu passieren.

In der Zuleitung 20 und/oder in der Zuleitung 13 bzw. an einer anderen geeigneten Stelle sind ferner Anschlussstutzen 33 bzw. 34 vorgesehen, über die nach Bedarf und wahlweise weitere Substanzen wie nicht verkehrsfähige Milch, keimtötende Mittel, Medikamente, Futterzusätze und dgl. zugeführt werden können.

Schliesslich können sämtliche Temperatursensoren 11, 12, 16, 18. 27, 28 und 32 und sämtliche Dosierorgane 9, 10, 15, 17, 25, 26, und 31 an eine nicht dargestellte Recheneinheit angeschlossen werden, mit welcher sodann die einzelnen Abläufe der gesamten Pasteurisierungsanlage 1, die stationär oder mobil installiert sein kann, automatisch geregelt bzw. gesteuert werden können. Vorzugsweise ist die Pasteurisierungsanlage über die Recheneinheit manuell oder automatisch regelbar.

Insgesamt ist mit der vorliegenden Erfindung eine wirtschaftlich arbeitende Pasteurisierungsanlage zum Pasteurisieren von flüssigen oder verflüssigten Nahrungsmitteln von Tieren, wie Milch, für die Tierfütterung geschaffen, die qualitätsschonend und flexibel eingesetzt werden kann, und zwar sowohl für die Erzeugung von verbrauchsfähigem Tierfutter aus z. B. roher Milch als auch aus z. B. gekühlter Milch, wobei die Zugabe von weiteren Substanzen, wie Medikamente und dgl. ebenfalls in einfacher Weise möglich ist.

Somit durchmischt sich kälteres Wasser im unteren Bereich nicht mit heissem Wasser im oberen Bereich, so dass ein optimierter Wärmeaustausch zum Pasteurisieren und abschliessendem Kühlen gewährleistet bleibt. Dies soll ebenfalls im Rahmen der vorliegenden Erfindung liegen.

Ferner ist bevorzugt vorgesehen, dass die Rohrwendel von Abkühl- und/oder Vorwärmschlange 6, 21 aus federndem Material besteht und schwebend in dem Kühlmedium angeordnet ist. Das Nahrungsmittel wird mit entsprechenden Einrichtungen, insbesondere Pumpen, pulsierend durch die Rohrwendel gedrückt. Dies versetzt die Rohrwendel in kurze, schwingende Bewegungen im Kühlmedium. Diese schwingenden Bewegungen beschleunigen und verbessern die Wärmeübertragung im Kühlmedium in beide Richtungen signifikant, ohne dass dabei die Temperaturschichten im Wasser von oben nach unten vermischt und somit zerstört werden.

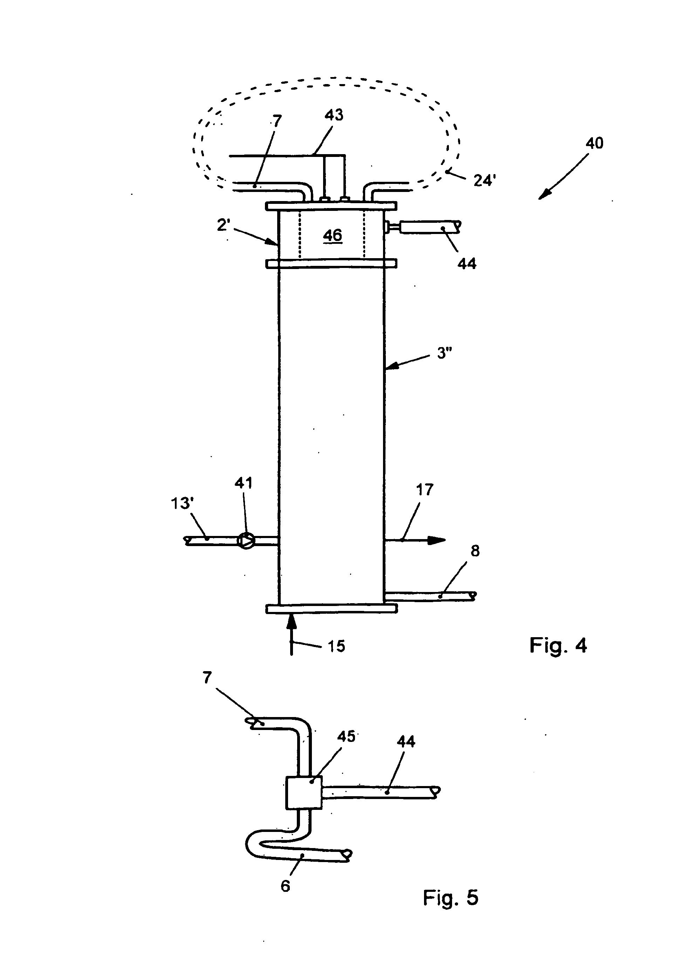

In einem weiteren Ausführungsbeispiel einer Pasteurisierungsanlage 40 gemäss Figur 4 ist eine Pasteurisierungseinheit 2' direkt einem Wärmetauscher 3" aufgesetzt. In den Wärmetauscher 3" mündet eine Zuleitung 13' für Milch, insbesondere für Biestmilch, die dann in einer nicht näher gezeigten Schlange durch den Wärmetauscher 3" und die Pasteurisierungseinheit 2' bis hin zu einem Auslaufstutzen 24' geführt und dabei vorgewärmt wird. In die Zuleitung 13' ist noch eine Pumpe 41 eingeschaltet. Ferner befindet sich die Zuleitung 13' in einer Höhe, in der die in den Wärmetauscher 3" eingeführte Milch nicht oder nur gering in Kontakt mit dem durch den Pfeil 15 angedeuteten Zulaufhahn für ein Kältemedium kommt. Ein Ablaufhahn 17 für das Kältemedium befindet sich ebenfalls etwa auf der Höhe der Zuleitung 13', damit kein Kurzschluss zwischen kaltem und bereits erwärmten Kühlmedium entsteht.

In dem Bereich der Pasteurisierungseinheit 2' ist eine Tauchsiedereinrichtung 43 eingesetzt, mit der das Wasser im Bereich der Pasteurisierungseinheit 2' auf Pasteurisierungstemperatur gebracht werden kann.

Anstelle der Tauchsiedereinrichtung 43 oder zusätzlich dazu kann die Milch in dem Zulaufstutzen 7 noch mit heissem Dampf versetzt werden. Dieser wird über eine Zuleitung 44 in die Pasteurisierungseinheit 2' eingebracht und gelangt, wie in Figur 5 erkennbar, in einer Mischkammer 45 in den Zulaufstutzen 7 und wird dort mit der Milch vermischt, wobei die Temperatur der Milch auf Pasteurisierungstemperatur angehoben wird. Bevorzugt wird in diesem Fall der Dampf in der Mischkammer 45 in Drehbewegung versetzt, was durch entsprechende Einbauten geschehen kann. Der Dampf verteilt sich schnell und gleichmässig mit der Milch. Hierdurch entstehen keine wärmeübertragenden Oberflächen und somit keine Ablagerungen, insbesondere Fouling. Insbesondere bei Biestmilch (Kolostrum) und anderen Ablagerungen bildenden Flüssigfutter verhindert der Dampf die Verklumpung der Biestmilch bzw. der anderen Flüssigfutter im oberen Temperaturbereich. Darüber hinaus fördert und erleichtert die Dampfzufuhr das Reinigen und Sterilisieren aller milchführenden Elemente in der Anlage.

Die Mischkammer 45 ist bevorzugt so klein wie möglich gehalten, um Toträume und damit Ablagerungen zu vermeiden. Ferner ist sowohl die Mischkammer 45. als auch ein Heisshalterohr 46 im Inneren bevorzugt mit wärmeisolierendem Material versehen, um heisse Oberflächen aufgrund von Dampf od. dgl. zu vermeiden. Dieses Material ist bevorzugt Teflon. Denkbar ist jedoch jedwedes andere, diese Eigenschaft aufweisende Material.

Die Mischkammer kann im übrigen auch ausserhalb der Pasteurisierungseinheit in dem Zulaufstutzen 7 vorgesehen sein.

Das Heisshalterohr 46 ist in der Pasteurisierungseinheit 2' ausgebildet, in der die Milch auf einer Temperatur von ca. 72°C während 15 bis 30 sec gehalten wird. Das Heisshalterohr kann auch ausserhalb angeordnet sein und aus einem Schlauchring bestehen, um die mechanische Reinigung zu optimieren. Der Schlauchring ist bevorzugt mit Schaumstoff umgeben, welcher den Wärmeverlust nach aussen verhindert.

Nach dem Heisshalterohr 46 wird die Milch in dem Wärmetauscher 3" wieder abgekühlt und durch einen Ablaufstutzen 8 ausgeleitet. Diese durch die Abkühlung von Kühlmedium aufgenommene Wärme wird zum Erwärmen der vorzuerwärmenden Milch verwendet.

Die Funktionsweise dieses Ausführurigsbeispiels ist wie folgt:
Die zu behandelnde Biestmilch wird über die Zuleitung 13' mittels der Pumpe 41 in die Pasteurisierungseinheit 2' eingebracht. Dabei wird über die Pumpenleistung die Durchlaufgeschwindigkeit und damit die Austrittgeschwindigkeit geregelt, wodurch wiederum die Temperaturen für die vorgewärmte Milch an dem Ablaufstutzen 24 und für die gekühlte Milch an dem Ablaufstutzen 8 vorgeregelt wird. So kann beispielsweise die vorgewärmte Milch für temperaturempfindliche Produkte, insbesondere Kolostrum, für die Dampfpasteurisierung unter der kritischen Grenze von 60° C gehalten werden.
Die Milch wird in der Pasteurisierungseinheit 2' durch das mittels der Tauchsiedereinrichtung 43 erwärmte Wasser und/oder durch den über die Zuleitung in die Mischkammer 45 eingebrachten Dampf auf Pasteurisierungstemperatur gebracht. Danach wird die Milch in der Abkühlschlange durch den Wärmetauscher 3" nach unten bis hin zu dem Ablaufstutzen 8 geführt und dabei schichtweise abgekühlt.

Bei diesen erfindungsgemässen Pasteurisierungsanlagen ist vor allem der sehr effektive Energiehaushalt hervorzuheben. Fast 75% der in die Anlage gesteckten Energie wird durch die erfindungsgemässe Führung von pasteurisierter und abzukühlender Milch und die Zuführung von zu erwärmender Frischmilch wieder gewonnen.

Darüber hinaus sind diese erfindungsgemässen Pasteurisierungsanlagen für den Betrieb und die Reinigung als durchlaufende Systeme ausgerichtet.

Vorzugsweise wird bei dem Verfahren durch Änderung der Leistung von Milch fördernden Pumpen eine Durchlaufgeschwindigkeit und damit eine Austrittgeschwindigkeit geregelt und damit eine Temperatur von vorgewärmter Milch bzw. gekühlter Milch vorgeregelt.

Vorzugsweise erfolgt die Pasteurisierung mittels einer Milch zugeführtem Dampf.

Vorzugsweise wird der Dampf in einer Mischkammer (45) mit der Milch in Rotation versetzt.

Vorzugsweise werden in dem jeweiligen Kreislauf für die flüssigen Nahrungsmittel für Tiere Anschlussstutzen (33, 34) vorgesehen sein, über die wahlweise weitere Substanzen, wie nicht verkehrsfähige Milch, keimabtötende Mittel, Medikamente und/oder eine Säure, insbesondere Ameisensäure od. dgl., zugeführt werden.

### Bezugszeichenliste

| | | | | |
|---|---|---|---|---|
| 1 | Pasteurisierungsanlage | 34 | Anschlussstutzen | 67 |
| 2 | Pasteurisierunqseinheit | 35 | Leitelement | 68 |
| 3; 3' | Wärmeaustauscher | 36 | | 69 |
| 4 | Tränkevorrichtung | 37 | | 70 |
| 5 | Leitung zu 4 | 38 | | 71 |
| 6 | Abkühischfanqe | 39 | | 72 |
| 7 | Zulaufstutzen | 40 | Pasteurisierungsanlage | 73 |
| 8 | Ablaufstutzen | 41 | Pumpe | 74 |
| 9 | Ventil | 42 | | 75 |
| 10 | Ventil | 43 | Tauchsiedereinrichtung | 76 |
| 11 | Temperatursensor | 44 | Zuleitung | 77 |
| 12 | Temperatursensor | 45 | Mischkammer | 78 |
| 13 | Zuleitung zu 3 bzw. 3' | 46 | Heisshalterohr | 79 |
| 14 | Wasser | 47 | | |
| 15 | Zulaufhahn | 48 | | |
| 16 | Temperatursensor | 49 | | |
| 17 | Ablaufhahn | 50 | | |
| 18 | Temperatursensor | 51 | | |
| 19 | Einlaufstutzen | 52 | | |
| 20 | Zuleitung zu 2 | 53 | | |
| 21 | Vorwärmrohrschlange | 54 | | |
| 22 | Kühltank | 55 | | |
| 23 | Zulaufstutzen | 56 | | |
| 24 | Ablaufstutzen | 57 | | |
| 25 | Sperrorgan | 58 | | |
| 26 | Sperrorgan | 59 | | |
| 27 | Temperatursensor | 60 | | |
| 28 | Temperatursensor | 61 | | |
| 29 | Rohrleitung zu 3 ; 3' | 62 | | |
| 30 | Rohrleitung zu 20 | 63 | | |
| 31 | Regelventil | 64 | | |
| 32 | Temperatursensor | 65 | | |
| 33 | Anschlussstutzen | 66 | | |

## Patentansprüche

1. Pasteurisierungsanlage zum Pasteurisieren von Tierfutter mit einer Pasteurisierungseinheit (2, 2') und einer als Wärmeaustauscher (3, 3', 3") ausgebildeten Kühleinheit, **dadurch gekennzeichnet, dass** eine Höhenausdehnung ("H") der Kühleinheit ein Mehrfaches ihrer grössten Querschnittsausdehnung ("D") beträgt und im Inneren eine Rohrleitung als Abkühlschlange (6) vorgesehen ist, die die Höhenausdehnung ("H") nahezu vollkommen nach unten durchläuft, wobei die Abkühlschlange (6) schraubenfederförmig ausgebildet ist und mit ihrem oberen Ende mit einem Zulaufstutzen (7) und ihrem unteren Ende mit einem am Wärmetauscher unten angeordneten Auslaufstutzen (8), welche jeweils an dem Wärmeaustauscher (3, 3', 3") angeordnet sind, verbunden ist.

2. Pasteurisierungsanlage nach Anspruch 1, **dadurch gekennzeichnet, dass** der Wärmeaustauscher (3, 3', 3") zylinderförmig ausgebildet ist und sich dessen Höhenausdehnung ("H") zum Durchmesser seines kreisförmigen Querschnitts ("D") wie 2 :1 bis 10 :1, insbesondere 4 : 1 verhält.

3. Pasteurisierungsanlage nach Anspruch 1 oder 2, **dadurch gekennzeichnet, dass** der Zulauf- und der Auslaufstutzen (7, 8) jeweils ein Regelorgan, wie Ventil (9, 10), und einen Sensor (11, 12) zur Temperaturmessung aufweist.

4. Pasteurisierungsanlage nach wenigstens einem der Ansprüche 1 bis 3, **dadurch gekennzeichnet, dass** der Zulaufstutzen (7) der Abkühlschlange (6) mit der Pasteurisierungseinheit (1) und der Auslaufstutzen (8) der Abkühlschlange (6) mit einem Vorratsbehälter zur Tränke (4) für Tiere verbunden ist.

5. Pasteurisierungsanlage nach Anspruch 4, **dadurch gekennzeichnet, dass** die Abkühlschlange (6) von Wasser (14) umgeben ist, welches über einen im Bodenbereich des Wärmeaustauschers (3, 3', 3") angeordneten Zulaufhahn (15) mit Temperatursensor (16) in diesen eintritt und über einen im Deckenbereich des Wärmetauschers (3, 3', 3") vorgesehenen Abflusshahn (17) mit Temperatursensor (18) aus diesem wieder austritt.

6. Pasteurisierungsanlage nach Anspruch 5, **dadurch gekennzeichnet, dass** der im Bodenbereich des Wärmeaustauschers (3 bzw. 3') vorgesehene Zulaufhahn (15) einen derartigen Einlaufstutzen (19) aufweist, dass das kalte Wasser (14) tangential in den Wärmeaustauscher (3 bzw. 3') einströmt.

7. Pasteurisierungsanlage nach einem der vorherigen Ansprüche, **dadurch gekennzeichnet, dass** der Wärmeaustauscher (3', 3") zusätzlich zur Abkühlschlange (6) für in der Pasteurisierungseinheit (2, 2') behandelten flüssigen Nahrungsmitteln für Tiere noch eine weitere vorzugsweise zylindrische schraubenfederförmige Vörwärmrohrschlange (21) zum Vorwärmen von insbesondere aus einem Kühltank (22) stammender flüssiger Nahrungsmittel für Tiere aufweist.

8. Pasteurisierungsanlage nach Anspruch 7, **dadurch gekennzeichnet, dass** die Vorwarmrohrschlange (21) gegenüber der Abkühlschlange (6) innerhalb, zwischen oder neben dieser angeordnet ist, wobei ggf. innerhalb des Wärmetauschers Leitelemente (35) zur Aufrechterhaltung der Temperaturschichtung über die Höhe (H) angeordnet sind.

9. Pasteurisierungsanlage nach Anspruch 7 oder 8, **dadurch gekennzeichnet, dass** die Vorwärmrohrschlange (21) im Bodenbereich des Wärmeaustauschers (3', 3") mit einem Zulaufstutzen (23, 23') und in dessen Deckenbereich mit einem Ablaufstutzen (24, 24') in Verbindung steht, wobei sowohl der Zulauf- als auch der Ablaufstutzen jeweils mit einem Sperrorgan (25, 26) und einem Temperatursensor (27, 28) ausgerüstet ist.

10. Pasteurisierungsanlage nach Anspruch 9, **dadurch gekennzeichnet, dass** der Zulaufstutzen (23) mit einem Kühltank (22) für flüssige Nahrungsmittel von Tieren und der Ablaufstutzen (24) mit der Pasteurisierungseinheft (2) verbunden sind.

11. Pasteurisierungsanlage nach wenigsten einem der vorhergehenden Ansprüche, **dadurch gekennzeichnet, dass** sämtliche Temperatursensoren (11, 12, 16, 18, 27, 28, 32) einerseits und sämtliche Dosierorgane (9, 10, 15, 17, 25, 26, 31) andererseits mit einer Recheneinheit in Verbindung stehen.

12. Pasteurisierungsanlage nach Anspruch 11, **dadurch gekennzeichnet, dass** diese über die Recheneinheit manuell oder automatisch regelbar ist.

13. Pasteurisierungsanlage nach wenigstens einem der Ansprüche 1 bis 12, **dadurch gekennzeichnet, dass** diese stationär oder mobil installiert ist.

14. Pasteurisierungsanlage nach wenigstens einem der Ansprüche 1 bis 13, **dadurch gekennzeichnet, dass** die Pasteurisierungseinheit (2') auf dem Wärmetauscher (3") aufsitzt.

15. Pasteurisierungsanlage nach Anspruch 14 **dadurch gekennzeichnet, dass** der Pasteurisierungseinheit (2') eine Tauchsiedereinheit (43) zugeordnet ist.

16. Verfahren zum Pasteurisieren von Tierfutter mit Hilfe einer Pasteurisierungsanlage, wobei die in der Pasteurisierungseinheit (2, 2') behandelten flüssigen Nahrungsmittel für Tiere, wie Milch, mit einer Temperatur zwischen 60°C bis 90°C, vorzugsweise 72°C in einer Abkühlschlange (6) eines Wärmeaustauschers (3, 3', 3") eingeleitet, bis hin zu einem Ablaufstutzen nach unten geführt und mit einer Temperatur zwischen 4°C bis 45°C, vorzugsweise 38°C aus diesem wieder ausgeleitet wird und durch die in die Abkühlschlange (6) des Wärmeaustauschers (3, 3', 3") eingeleiteten, in der Pasteurisierungseinheit (2, 2') behandelten Nahrungsmitteln für Tiere mit einem die Abkühlschlange (6) umgebenden Kühlmedium (14) ein derartiger Wärmeaustausch erfolgt, dass ein über einen Zulaufhahn (15) im Bodenbereich des Wärmetauschers mit einer Temperatur von etwa -10°C bis 20°C, vorzugsweise 15°C, in den Wärmeaustauscher (3 bzw. 3') eintretendes Kaltwasser diesen über den im Deckenbereich des Wärmetauschers vorgesehenen Abflusshahn (17) mit einer entsprechend erhöhten Temperatur wieder verlässt.

17. Verfahren nach Anspruch 16, **dadurch gekennzeichnet, dass** ein flüssiges Nahrungsmittel für Tiere aus einem Kühltank (22) mit einer Temperatur von etwa 6°C, insbesondere mit etwa 4°C in eine Vorwärmrohrschlange (21) eingeführt, von dieser dann vorgewärmt in die Pasteurisierungseinheit (2) weitergeleitet und sodann nach deren Keimfreimachung in dieser über eine Abkühlschlange (6) mindestens einer Tränke (4) für die Tiere gebrauchsfertig zugeführt wird.

18. Verfahren nach Anspruch 16 oder 17, **dadurch gekennzeichnet, dass** durch Änderung der Leistung von Milch fördernden Pumpen eine Durchlaufgeschwindigkeit und damit eine Austrittgeschwindigkeit geregelt und damit eine Temperatur von vorgewärmter Milch bzw. gekühlter Milch vorgeregelt wird.

19. Verfahren nach wenigstens einem der Ansprüche 16 bis 18, **dadurch gekennzeichnet, dass** die Pasteurisierung mittels einer Milch zugeführtem Dampf erfolgt.

20. Verfahren nach Anspruch 19, **dadurch gekennzeichnet, dass** der Dampf In einer Mischkammer (45) mit der Milch in Rotation versetzt wird.

21. Verfahren nach wenigstens einem der Ansprüche 16 bis 20, **dadurch gekennzeichnet, dass** in dem jeweiligen Kreislauf für die flüssigen Nahrungsmittel für Tiere Anschlussstutzen (33, 34) vorgesehen sind, über die wahlweise weitere Substanzen, wie nicht verkehrsfähige Milch, keimabtötende Mittel, Medikamente und/oder eine Säure, insbesondere Ameisensäure od. dgl., zugeführt werden.

22. Verfahren nach wenigstens einem der Ansprüche 16 bis 21, dadurch geennzeichnet, dass das Tierfutter in zumindest einer Rohrwendel
durch die Pasteurisiereinheit (2, 2') und/oder den Wärmetauscher (3, 3', 3") gepulst geführt und die Rohrwendel dadurch In Schwingung versetzt wird.

23. Verfahren nach wenigstens einem der Ansprüche 16 bis 22, **dadurch gekennzeichnet, dass** eine Pasteurisierungstemperatur in der Pasteurisierungseinheit (2, 2') über Temperatursensoren im Eintauchbereich einer Tauchsiedereinrichtung (43) und/oder durch Regelung einer Heisswasserzufuhr in einem Heisswasserzufuhrbereich und/oder durch Regelung einer Dampfzufuhr im Bereich einer Mischkammer (45) geregelt wird.

## Claims

1. A pasteurising installation for pasteurising animal feed, having a pasteurising unit (2, 2') and a cooling unit which is in the form of a heat exchanger (3, 3', 3"), **characterised in that** a vertical dimension ("H") of the cooling unit Is a multiple of the largest cross-sectlonal dimension ("D") of the latter and a pipe is provided in the interior as a cooling coil (6) and runs downwards through virtually the entire vertical dimension ("H"), wherein the cooling coil (6) is in the shape of a helical spring and is connected with its upper end to a feed connection-piece (7) and with Its lower end to a delivery connection-piece (8) arranged at the bottom of the heat exchanger, which connection pieces in each case are arranged at the heat exchanger (3, 3', 3").

2. A pasteurising installation according to claim 1, **characterised in that** the heat exchanger (3, 3', 3") is cylindrical and the ratio of its vertical dimension ("H") to the diameter of its circular cross-section ("D") is 2:1 to 10:1, In particular 4: 1.

3. A pasteurising installation according to claim 1 or 2, **characterised in that** the feed connection-piece and the delivery connection-piece (7, 8) each have a regulating member, such as a valve (9, 10), and a sensor (11, 12) for temperature measurement.

4. A pasteurising installation according to at least one of claims 1 to 3, **characterised In that** the feed connection-piece (7) of the cooling coil (6) is connected to the pasteurising unit (1) and the delivery connection-piece (8) of the cooling coil (6) is connected to a reservoir for the animal drinking-trough (4).

5. A pasteurising installation according to claim 4, **characterised in that** the cooling coil (6) Is surrounded by water (14) which enters the heat exchanger (3, 3', 3") via a feed tap (15), with temperature sensor (16), arranged in the bottom region of the heat exchanger (3,'3', 3") and exits therefrom again via an outflow tap (17), with temperature sensor (18), provided in the cover region of the heat exchanger (3, 3', 3").

6. A pasteurising installation according to claim 5, **characterised in that** the feed tap (15) provided In the bottom region of the heat exchanger (3 or 3') has an Intake connection-piece (19) of the type that the cold water (14) flows into the heat exchanger (3 or 3') in a tangential manner.

7. A pasteurising installation according to any one of the preceding claims, **characterised in that** in addition to the cooling coil (6) for liquid animal feed treated in the pasteurising unit (2, 2'), the heat exchanger (3', 3") has another preferably cylindrical, helical-spring-shaped pre-heating pipe coil (21) for the pre-heating of liquid animal feed coming in particular from a cooling tank (22).

8. A pasteurising installation according to claim 7, **characterised in that** the pre-heating pipe coil (21) is arranged with respect to the cooling coil (6) so as to be within, between or alongside the latter, wherein optionally guiding elements (35) to maintain the thermal stratification are arranged within the heat exchanger, over the height (H) thereof.

9. A pasteurising installation according to claim 7 or 8, **characterised in that** the pre-heating pipe coil (21) is connected in the bottom region of the heat exchanger (3', 3") to a feed connection-piece (23, 23') and in the cover region thereof to an outlet connection-piece (24, 24'), wherein the feed connection-piece and the outlet connection-piece are each equipped with a blocking member (25, 26) and a temperature sensor (27, 28).

10. A pasteurising installation according to claim 9, **characterised in that** the feed connection-piece (23) is connected to a cooling tank (22) for liquid animal feed and the outlet connection-piece (24) is connected to the pasteurising unit (2).

11. A pasteurising installation according to at least one of the preceding claims, **characterised in that** all temperature sensors (11, 12, 16, 18, 27, 28, 32) on the one hand and all metering members (9, 10, 15, 17, 25, 26, 31) on the other hand are connected to a computing unit.

12. A pasteurising installation according to claim 11, **characterised in that** it can be regulated manually or automatically via the computing unit.

13. A pasteurising installation according to at least one of claims 1 to 12, **characterised in that** it is installed so as to be fixed or mobile.

14. A pasteurising installation according to at least one of claims 1 to 13, **characterised in that** the pasteurising unit (2') is mounted on the heat exchanger (3").

15. A pasteurising installation according to claim 14, **characterised in that** an immersion heater unit (43) is associated with the pasteurising unit (2').

16. A method of pasteurising animal feed with the aid of a pasteurising installation, wherein the fluid animal feed, such as milk, treated in the pasteurising unit (2, 2') is introduced in a cooling coil (6) of a heat exchanger (3, 3', 3") at a temperature between 60°C to 90°C, preferably 72°, is guided downwards to an outlet connection-piece and is led therefrom again at a temperature between 4°C to 45°C, preferably 38°C, and, through the animal feed treated in the pasteurising unit (2, 2') and introduced into the cooling coil (6) of the heat exchanger (3, 3', 3"), such a heat exchange takes place by means of a cooling medium (14) surrounding the cooling coil (6) that cold water entering the heat exchanger (3 or 3') at a temperature from approximately -10°C to 20°C, preferably 15°C, via a feed tap (15) in the bottom region of the heat exchanger leaves the heat exchanger again at a correspondingly increased temperature via the outflow tap (17) provided in the cover region of the heat exchanger.

17. A method according to claim 16, **characterised in that** a liquid animal feed is introduced, at a temperature of approximately 6°C, in particular at approximately 4°C, from a cooling tank (22) into a pre-heating pipe coil (21), is then transferred, pre-heated by the latter, into the pasteurising unit (2) and thereafter after sterilization thereof in the latter is supplied, via a cooling coil (6), in a ready for use state to at least one animal drinking-trough (4).

18. A method according to claim 16 or 17, **characterised in that** through alteration of the performance of milk-conveying pumps, a throughput speed and thereby an exit speed are regulated and thereby a temperature of pre-heated milk or cooled milk is pre-regulated.

19. A method according to at least one of claims 18 to 18, **characterised in that** the pasteurisation takes place by means of steam supplied to milk.

20. A method according to claim 19, **characterised in that** the steam is set in rotation with the milk in a mixing chamber (45).

21. A method according to at least one of claims 16 to 20, **characterised in that** connection pieces (33, 34) are provided in the respective circuit for the liquid animal feed, via which connection pieces (33, 34) further substances, such as non-tradeable milk, germ-killing means, medicines and/or an acid, in particular formic acid or the like, are supplied selectively.

22. A method according to at least one of claims 16 to 21, **characterised in that** the animal feed is guided, in at least one helical tube, in a pulsed manner through the pasteurising unit (2, 2') and/or the heat exchanger (3, 3', 3") and the helical tube is thereby oscillated.

23. A method according to at least one of claims 16 to 22, **characterised in that** a pasteurising temperature in the pasteurising unit (2, 2') and then is regulated via temperature sensors in the immersion region of an immersion heater device (43) and/or by regulation of a hot-water feed in a hot-water feed region and/or through regulation of a steam feed in the region of a mixing chamber (45).

## Revendications

1. Installation de pasteurisation pour la pasteurisation d'aliments pour animaux, avec une unité de pasteurisation (2, 2') et une unité de réfiigération réalisée sous forme d'échangeur de chaleur (3, 3', 3 "), **caractérisée par le fait qu'**une extension en hauteur ("H") de l'unité de refroidissement est un multiple de son extension en section la plus grande ("D"), et qu'à l'intérieur est prévue une tuyauterie sous forme de serpentin de refroidissement (6) qui longe vers le bas quasi entièrement l'extension en hauteur ("H"), le serpentin de refroidissement (6) étant réalisé en spirale et étant connecté par son extrémité supérieure à une tubulure d'alimentation (7) et par son extrémité inférieure à une tubulure de sortie (8) disposée dans le bas de l'échangeur de chaleur, lesquelles sont disposées, chacune, sur l'échangeur de chaleur (3, 3', 3").

2. Installation de pasteurisation selon la revendication 1, **caractérisée par le fait que** l'échangeur de chaleur (3, 3', 3") est réalisé de forme cylindrique et que son extension en hauteur ("H") présente avec le diamètre de sa section circulaire ("D") un rapport de 2:1 à 10:1, en particulier de 4:1.

3. Installation de pasteurisation selon la revendication 1 ou 2, **caractérisée par le fait que** les tubulures d'alimentation et de sortie (7, 8) présentent, chacune, un organe de réglage, tel qu'une soupape (9, 10), et un capteur (11. 12) pour mesurer la température.

4. Installation de pasteurisation selon au moins l'une des revendications 1 à 3, **caractérisée par le fait que** la tubulure d'alimentation (7) du serpentin de refroidissement (6) est connectée à l'unité de pasteurisation (1) et que la tubulure de sortie (8) du serpentin de refroidissement (6) est connectée à un réservoir vers l'abreuvoir (4) pour animaux.

5. Installation de pasteurisation selon la revendication 4, **caractérisée par le fait que** le serpentin de refroidissement (6) est entouré d'eau (14) qui entre, via un robinet d'alimentation (15) à capteur de température (16) disposé dans la zone de fond de l'échangeur de chaleur (3, 3', 3"), dans ce dernier et ressort de ce dernier via un robinet d'évacuation (17) à capteur de température (18) prévu dans une zone de plafond de l'échangeur de chaleur (3, 3', 3").

6. Installation de pasteurisation selon la revendication 5, **caractérisée par le fait que** le robinet d'alimentation (15), prévu dans la zone de fond de l'échangeur de chaleur (3 ou 3'), présente une tubulure d'alimentation (19) telle que l'eau froide (14) pénètre tangentiellement dans l'échangeur de chaleur (3 ou 3").

7. Installation de pasteurisation selon l'une des revendications précédentes, **caractérisée par le fait que** l'échangeur de chaleur (3', 3") présente, en plus du serpentin de refroidissement (6) pour les aliments liquides pour animaux traités dans l'unité de pasteurisation (2, 21), également un autre serpentin de préchauffage (21), de préférence cylindrique en spirale, pour le préchauffage d'aliments liquides pour animaux provenant, en particulier, d'un réservoir de refroidissement (22).

8. Installation de pasteurisation selon la revendications 7, **caractérisée par le fait que** le serpentin de préchauffage (21) est disposé vis-à-vis du serpentin de refroidissement (6), à l'intérieur, entre ou à côté de ce dernier, à l'intérieur de l'échangeur de chaleur étant éventuellement disposés des éléments de guidage (35) destinés à maintenir la stratification thermique sur toute la hauteur (H).

9. Installation de pasteurisation selon la revendication 7 ou 8, **caractérisée par le fait que** le serpentin de préchauffage (21) est relié dans la zone de fond de l'échangeur de chaleur (3', 3") à une tubulure d'alimentation (23, 23') et dans sa zone de plafond à une tubulure de sortie (24, 24'), tant la tubulure d'alimentation que la tubulure de sortie étant munies, chacune, d'un organe d'arrêt (25, 26) et d'un capteur de température (27, 28).

10. Installation de pasteurisation selon la revendication 9, **caractérisée par le fait que** la tubulure d'alimentation (23) est reliée à un réservoir de refroidissement (22) pour aliments liquides pour animaux et que la tubulure de sortie (24) est reliée à l'unité de pasteurisation (2).

11. Installation de pasteurisation selon au moins l'une des revendications précédentes, **caractérisée par le fait que** tous les capteurs de température (11, 12, 16, 18, 27, 28, 32), d'une part, et tous les organes de dosage (9, 10, 15, 17, 25, 26, 31), d'autre part, sont reliés à une unité de calcul.

12. Installation de pasteurisation selon la revendication 11, **caractérisée par le fait qu'**elle est réglable manuellement ou automatiquement par l'intemnédiaire de l'unité de calcul.

13. Installation de pasteurisation selon au moins l'une des revendications 1 à 12, **caractérisée par le fait qu'**elle est installée de manière stationnaire ou mobile.

14. Installation de pasteurisation selon au moins l'une des revendications 1 à 13, **caractérisée par le fait que** l'unité de pasteurisation (2') est placée sur l'échangeur de chaleur (3").

15. Installation de pasteurisation selon la revendication 14, **caractérisée par le fait qu'**à l'unité de pasteurisation (2') est associée une unité d'ébullition submergée (43).

16. Procédé pour la pasteurisation d'aliments pour animaux à l'aide d'une installation de pasteurisation, les aliments liquides pour animaux traités dans l'unité de pasteurisation (2, 2'), tels que le lait, étant introduits à une température comprise entre 60°C et 90°C, de préférence de 72°C, dans un serpentin de refroidissement (6) d'un échangeur de chaleur (3, 3', 3"), guidés vers le bas jusqu'à une tubulure de sortie et étant à nouveau sortis de ce dernier à une température comprise entre 4°C et 45°C, de préférence de 38°C, et que par les aliments pour animaux introduits dans le serpentin de refroidissement (6) de l'échangeur de chaleur (3, 3', 3') et traités dans l'unité de pasteurisation (2, 2') ayant lieu avec le fluide de refroidissement (14) entourant le serpentin de refroidissement (6) un échange de chaleur tel qu'une eau froide pénétrant dans l'échangeur de chaleur (3 ou 3'), via un robinet d'alimentation (15) dans la zone de fond de l'échangeur de chaleur, à une température d'environ -10°C à 20°C, de préférence de 15°C, sorte à nouveau de ce dernier, via le robinet d'évacuation (17) prévu dans la partie de plafond de l'échangeur de chaleur, à une température augmentée en conséquence.

17. Procédé selon la revendication 16, **caractérisé par le fait qu'**un aliment liquide pour animaux est introduit à partir d'un réservoir de refroidissement (22), à une température d'environ 6°C, en particulier d'environ 4°C, dans un serpentin de préchauffage (21), puis transféré de ce dernier, préchauffé, dans l'unité de pasteurisation (2) et ensuite, après sa stérilisation dans cette dernière, alimenté prêt à l'utilisation, via un serpentin de refroidissement (6) vers au moins un abreuvoir (4) pour les animaux.

18. Procédé selon la revendication 16 ou 17, **caractérisé par le fait que** par variation de la puissance des pompes acheminant le lait est réglée une vitesse de passage et, de ce fait, une vitesse de sortie, et est donc préréglée une température du lait préchauffé ou refroidi.

19. Procédé selon au moins l'une des revendications 16 à 18, **caractérisé par le fait que** la pasteurisation a lieu par de la vapeur amenée dans le lait.

20. Procédé selon la revendication 19, **caractérisé par le fait que** la vapeur est mise en rotation avec le lait dans une chambre de mélange (45).

21. Procédé selon au moins l'une des revendications 16 à 20, **caractérisé par le fait que** dans le circuit respectif pour les aliments liquides pour animaux sont prévues des tubulures de raccordement (33, 34) via lesquelles sont alternativement amenées d'autres substances, telles que du lait non apte à la commercialisation, des substances germicides, des médicaments et/ou un acide, en particulier de l'acide formique ou autre.

22. Procédé selon au moins l'une des revendications 16 à 21, **caractérisé par le fait que** l'aliment pour animaux est introduit de manière pulsée dans au moins un serpentin traversant l'unité de pasteurisation (2, 2') et/ou l'échangeur de chaleur (3, 3', 3 ") et que le serpentin est ainsi mis en oscillation.

23. Procédé selon au moins l'une des revendications 16 à 22, **caractérisé par le fait qu'**une température de pasteurisation dans l'unité de pasteurisation (2, 2') est réglée par des capteurs de température dans la zone de submersion d'une dispositif d'ébullition submergé (43) et/ou par réglage d'une alimentation d'eau chaude dans une zone d'alimentation d'eau chaude et/ou par réglage d'une d'alimentation de vapeur dans la zone d'une chambre de mélange (45).
